# EUROPEAN PATENT APPLICATION

(11) **EP 4 768 289 A1**
(43) Date of publication of application: **01.07.2026**
(21) Application number: 25223213.7
(22) Date of filing: 15.12.2025
(51) Int. Cl.: B60J 1/20

(54) **SLIDING SCREEN ASSEMBLY, AUTOMOTIVE SEAT, AUTOMOTIVE SUNROOF, AND AUTOMOBILE**

(30) Priority: 27.12.2024 CN 202423272886 U
(71) Applicant: AUMOVIO Germany GmbH, 60488 Frankfurt am Main (DE)
(72) Inventor: Zhang, Gaolei, Wuhu, Anhui, 241009 (CN); Xu, Mingyuan, Wuhu, Anhui Province, 241009 (CN); Ji, Yuanfeng, Wuhu, Anhui, 241009 (CN)
(74) Representative: Aumovio Corporation

(57) **Abstract**

The application discloses a sliding screen assembly, including: a winding unit; a flexible screen (2), wound on the winding unit, the flexible screen being provided with a free end, and the free end being provided with a traction portion (22); and a flexible screen support frame (3) capable of being deployed and retracted; where the flexible screen support frame (3) is capable of abutting against the traction portion (22), and the flexible screen support frame (3) is deployed to pull the traction portion (22) to move in a forward direction, so that the winding unit unwinds the flexible screen (2), the flexible screen (2) is deployed, and the flexible screen support frame (3) supports the flexible screen (2); the flexible screen support frame (3) is retracted to drive the traction portion (22) to move in a reverse direction, so that the winding unit rewinds the flexible screen (2), and the flexible screen (2) is retracted. The application further discloses an automotive seat, an automotive sunroof, and an automobile.

## Description

### Technical Field

The present application relates to the field of automobile technologies, and in particular, to a sliding screen assembly, an automotive seat, an automotive sunroof, and an automobile.

### Background

In the consumer electronics industry, there are assemblies or devices for deploying or retracting flexible screens, but these assemblies or devices are usually arranged in upper space of the flexible screens. Driven or moved by these assemblies or devices, the flexible screens are deployed from top to bottom and retracted from bottom to top. A deploying and retracting mechanism of a projection screen is an example.

There is no space above automobile interiors such as a dashboard, and therefore, there is currently no effective layout plan for a flexible screen. In order to deploy within a complex and limited space of a dashboard, an existing flexible screen often needs to be transferred from a back side of the dashboard to an upper side of the dashboard, and then slide down from the upper side for deployment, resulting in complex motion trajectories of the flexible screen.

### Summary

The present application proposes a sliding screen assembly, for solving the above problems.

In a first aspect, an implementation of the present application discloses a sliding screen assembly, including: a winding unit; a flexible screen, wound on the winding unit, the flexible screen being provided with a free end, and the free end being provided with a traction portion; and a flexible screen support frame capable of being deployed and retracted; where the flexible screen support frame is capable of abutting against the traction portion, and the flexible screen support frame is deployed to pull the traction portion to move in a forward direction, so that the winding unit unwinds the flexible screen, the flexible screen is deployed, and the flexible screen support frame supports the flexible screen; the flexible screen support frame is retracted to drive the traction portion to move in a reverse direction, so that the winding unit rewinds the flexible screen, and the flexible screen is retracted.

By means of the above technical solution, after the flexible screen support frame abuts against the traction portion of the flexible screen, the flexible screen support frame is deployed and retracted linearly to drive the flexible screen to be deployed and retracted along a linear motion trajectory, and the motion trajectory is simple. At the same time, the flexible screen can be driven to be deployed and retracted only by the flexible screen support frame. The structure is simple, and there is no need to arrange guide tracks for deploying and retracting the flexible screen, thus features a simple and elegant appearance when the flexible screen is retracted. In addition, after being deployed, the flexible screen support frame can support the flexible screen to prevent collapse of the flexible screen that affects a screen display effect.

Optionally, the sliding screen assembly includes: a fixed base; a connecting arm having one end hinged to the fixed base and the other end fixedly connected to the flexible screen support frame; and a first drive unit connected to the connecting arm and configured to drive the connecting arm to rotate, so that the connecting arm is capable of driving the flexible screen support frame to rotate, allowing the flexible screen support frame to abut against and separate from the traction portion.

Optionally, the flexible screen support frame includes: an upper rod; a lower rod; and a scissor-type link, including a first link and a second link, the first link and the second link being hinged at middle portions; where the first link has a first end and a second end opposite to each other, the first end is hinged to the upper rod, and the second end is slidably connected to the lower rod; the second link has a third end and a fourth end opposite to each other, the third end is slidably connected to the upper rod, and the fourth end is hinged to the lower rod; and by unfolding and folding the scissor-type link, the upper rod and the lower rod are driven to move away from and approach each other, so that the flexible screen support frame is deployed and retracted.

Optionally, the flexible screen support frame includes: an intermediate link, the intermediate link including a third link and a fourth link, the third link having a fifth end and a sixth end opposite to each other, the fourth link having a seventh end and an eighth end opposite to each other, where the fifth end is hinged to the upper rod, the sixth end is hinged to the seventh end, and the eighth end is hinged to the lower rod; and the intermediate link is deployed and retracted as the scissor-type link is unfolded and folded.

Optionally, there are two scissor-type links, and the two scissor-type links are symmetrically arranged about a line connecting a center line of the upper rod and a center line of the lower rod.

Optionally, there are at least two intermediate links, and the at least two intermediate links are arranged in an extension direction of the upper rod.

Optionally, the sliding screen assembly includes a second drive unit, the second drive unit being arranged between the two scissor-type links; where the second drive unit includes: a lead screw, the lead screw being arranged parallel to the upper rod and arranged between the two scissor-type links; a drive motor configured to drive the lead screw to rotate; a first lead screw nut; and a second lead screw nut; where the first lead screw nut and the second lead screw nut are respectively connected to the third ends of the two scissor-type links to drive the two third ends to slide in opposite directions; and/or, the first lead screw nut and the second lead screw nut are respectively connected to the second ends of the two scissor-type links to drive the two second ends to slide in opposite directions.

Optionally, a distance between the third ends of the two scissor-type links is smaller than a distance between the first ends of the two scissor-type links.

Optionally, the traction portion of the flexible screen is hook-shaped and is configured to abut against the lower rod of the flexible screen support frame so that the flexible screen support frame drives the flexible screen to be deployed and retracted.

In a second aspect, an implementation of the present application discloses an automotive seat, including the sliding screen assembly according to any one of aforementioned embodiments in the first aspect.

In a third aspect, an implementation of the present application discloses an automotive sunroof, including the sliding screen assembly according to any one of aforementioned embodiments in the first aspect.

In a fourth aspect, an implementation of the present application discloses an automobile, including a hidden portion configured to hide the sliding screen assembly according to any one of aforementioned embodiments in the first aspect. The hidden portion includes: an opening; an accommodating cavity, where the sliding screen assembly is accommodated in the accommodating cavity, when the flexible screen is deployed, the sliding screen assembly extends from the accommodating cavity through the opening, and when the flexible screen is retracted, the sliding screen assembly is retracted into the accommodating cavity through the opening; and a cover plate capable of covering and opening the opening.

### Brief Description of Drawings

FIG. 1 shows a first perspective view of a sliding screen assembly according to an embodiment of the present application;
FIG. 2 shows a second perspective view of a sliding screen assembly according to an embodiment of the present application;
FIG. 3 shows a third perspective view of a sliding screen assembly according to an embodiment of the present application;
FIG. 4 shows a fourth perspective view of a sliding screen assembly according to an embodiment of the present application;
FIG. 5 shows a first side view of a sliding screen assembly according to an embodiment of the present application;
FIG. 6 shows a second side view of a sliding screen assembly according to an embodiment of the present application; and
FIG. 7 shows a third side view of a sliding screen assembly according to an embodiment of the present application.

### Detailed Description

The following describes implementations of the present application through specific embodiments. Those skilled in the art can easily understand other advantages and effects of the present application from contents disclosed in this specification. Although the description of the present application will be introduced in conjunction with a preferred embodiment, it does not mean that features of the present application are limited to this implementation. On the contrary, the purpose of introducing the present application in conjunction with the implementation is to cover other options or modifications that may be extended based on the claims of the present application. In order to provide a deeper understanding of the present application, the following description includes many specific details. The present application can also be implemented without these details. Furthermore, in order to avoid confusion or blurring key points of the present application, some specific details will be omitted from the description. It should be explained that where no conflict arises, embodiments in the present application may be combined, and features in embodiments may be combined.

It should be noted that in this specification, similar reference numerals and letters denote similar items in the following drawings, and therefore, once an item is defined in one drawing, it does not need to be further defined or explained in subsequent drawings.

In addition, terms such as "first" and "second" are merely used for descriptive purposes, and must not be interpreted as indicating or implying relative importance.

In the description of this embodiment, it should be further noted that, unless otherwise clearly specified and defined, terms such as "arrange", "connected", and "connect" should be interpreted in a broad sense, for example, they may indicate a fixed connection, or a removable connection, or an integral connection; they may indicate a mechanical connection, or an electrical connection; they may indicate a direct connection, or an indirect connection via an intermediate medium, or internal communication between two elements. Those of ordinary skill in the art can interpret the specific meaning of the above-mentioned terms in this embodiment according to particular circumstances.

In order to make the purpose, technical solutions, and advantages of the present application clearer, implementations of the present application will be described in further detail below with reference to the accompanying drawings.

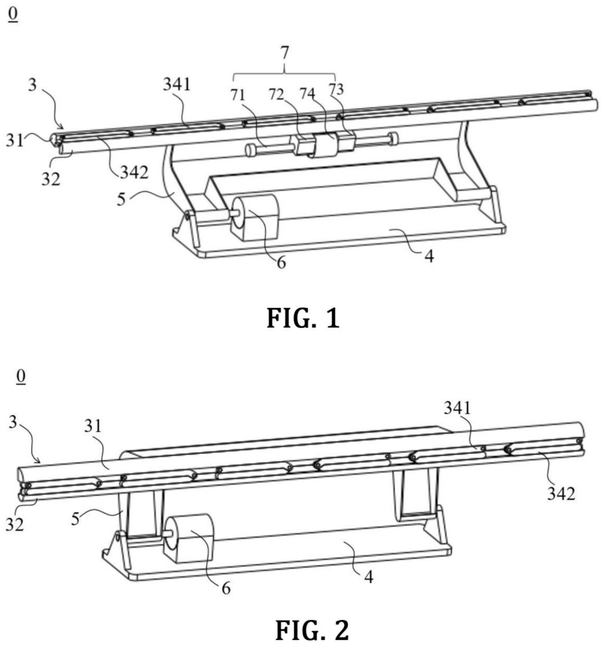

In a first aspect, referring to FIG. 1 to FIG. 7, an implementation of the present application discloses a sliding screen assembly 0.

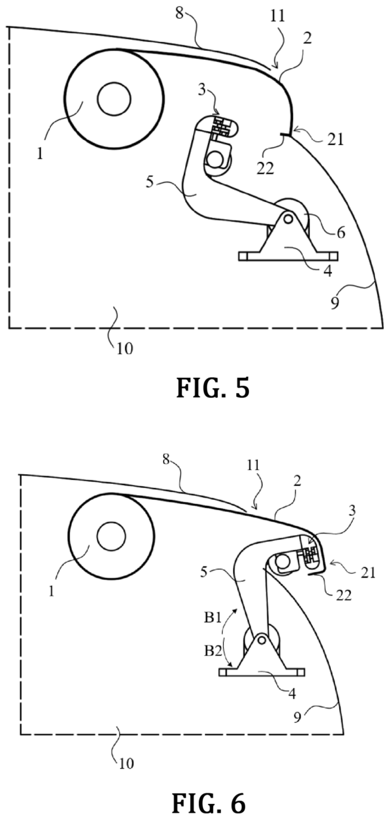

Referring to FIG. 5 to FIG. 7, the sliding screen assembly 0 includes a winding unit 1, a flexible screen 2, and a flexible screen support frame 3.

The flexible screen 2 is wound on the winding unit 1. One end of the flexible screen 2 is connected to the winding unit 1, and the other end of the flexible screen 2 is a free end 21. The flexible screen 2 is provided with the free end 21, and the free end 21 is provided with a traction portion 22.

The flexible screen support frame 3 is capable of being deployed and retracted. The flexible screen support frame 3 is capable of abutting against the traction portion 22, and the flexible screen support frame 3 is deployed to pull the traction portion 22 to move in a forward direction, so that the winding unit 1 unwinds the flexible screen 2, the flexible screen 2 is deployed, and the flexible screen support frame 3 supports the flexible screen 2. The flexible screen support frame 3 is retracted to drive the traction portion 22 to move in a reverse direction, so that the winding unit 1 rewinds the flexible screen 2, and the flexible screen 2 is retracted.

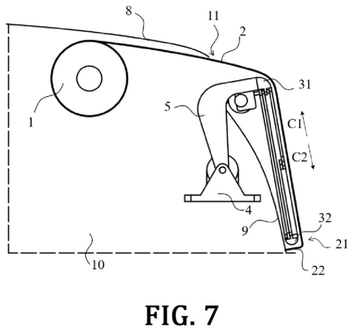

Specifically, as shown in FIG. 6, the traction portion 22 of the flexible screen 2 is capable of abutting against the flexible screen support frame 3. As shown in FIG. 7, when the flexible screen support frame 3 is deployed, the flexible screen support frame 3 may pull the traction portion 22 of the flexible screen 2 to move linearly in a third direction shown in the figure (i.e., a direction C1) and move linearly in a fourth direction (i.e., a direction C2). Specifically, the movement in the fourth direction (i.e., the direction C2) enables the winding unit 1 to unwind the flexible screen 2, so that the flexible screen 2 is deployed along a linear trajectory, and the movement of the traction portion 22 of the flexible screen 2 pulled by the flexible screen support frame 3 in the third direction (i.e., the direction C1) enables the winding unit 1 to rewind the flexible screen 2, so that the flexible screen 2 is retracted along a linear trajectory.

In this embodiment, one end of the flexible screen 2 is wound on the winding unit 1, and the other end is the free end 21, the free end 21 being hinged to the support plate 3. In deploying and retracting processes of the flexible screen 2, the winding unit 1 provides a certain tensioning force to the flexible screen 2 to ensure that the flexible screen 2 is taut.

In some possible embodiments, the winding unit 1 is arranged below the flexible screen 2. When the flexible screen 2 is deployed, the winding unit 1 unwinds the flexible screen 2, and the flexible screen 2 wound on the winding unit 1 moves from bottom to top to a predetermined position, and then moves from top to bottom to a deployed position.

Preferably, the winding unit 1 is arranged behind the flexible screen 2. When the flexible screen 2 is deployed, the winding unit 1 unwinds the flexible screen 2, and the flexible screen 2 the flexible screen 2 wound on the winding unit 1 moves from rear to front to a predetermined position, and then moves from top to bottom to a deployed position.

In some possible embodiments, the winding unit 1 is a roller. The roller is connected to a drive motor. The drive motor drives the roller to roll to rewind and unwind the flexible screen 2.

In some other possible embodiments, the winding unit 1 is a coil spring. The coil spring has an automatic reset function and can automatically rewind the flexible screen 2.

By means of the above technical solution, after the flexible screen support frame 3 abuts against the traction portion 22 of the flexible screen 2, the flexible screen support frame 3 is deployed and retracted linearly to drive the flexible screen 2 to be deployed and retracted along a linear motion trajectory, and the motion trajectory is simple. At the same time, the flexible screen 2 can be driven to be deployed and retracted only by the flexible screen support frame 3. The structure is simple, and there is no need to arrange guide tracks for deploying and retracting the flexible screen 2, thus features a simple and elegant appearance. In addition, after being deployed, the flexible screen support frame 3 can support the flexible screen 2 to prevent collapse of the flexible screen 2 that affects a screen display effect.

In some possible embodiments of the present application, referring to FIG. 1 to FIG. 7, the sliding screen assembly 0 includes a fixed base 4, a connecting arm 5, and a first drive unit 6.

Referring to FIG. 6, one end of the connecting arm 5 is hinged to the fixed base 4 so that the connecting arm 5 can rotate around a hinge point between the end of the connecting arm 5 and the fixed base 4, that is, the connecting arm 5 can rotate in a fifth direction (i.e., a direction B1) and a sixth direction (i.e., a direction B2). The other end of the connecting arm 5 is fixedly connected to the flexible screen support frame 3, so that when rotating in the fifth direction (i.e., the direction B1) and the sixth direction (i.e., the direction B2), the connecting arm 5 can drive the flexible screen support frame 3 to rotate in the fifth direction (i.e., the direction B1) and the sixth direction (i.e., the direction B2).

The first drive unit 6 is connected to the connecting arm 5 and configured to drive the connecting arm 5 to rotate, so that the connecting arm 5 is capable of driving the flexible screen support frame 3 to rotate, allowing the flexible screen support frame 3 to abut against (as shown in FIG. 6) and separate from (as shown in FIG. 5) the traction portion 22.

Exemplarily, the first drive unit 6 is a drive motor.

FIG. 5 is a schematic view of the flexible screen support frame 3 being separated from the traction portion 22, and FIG. 1 is a schematic perspective view of some components in the sliding screen assembly (the flexible screen support frame 3, the second drive unit 7, the connecting arm 5, the first drive unit 6, and the fixed base 4) in this state.

FIG. 6 is a schematic view of the flexible screen support frame 3 abutting against the traction portion 22 and the flexible screen support frame 3 being in a retracted state, and FIG. 2 is a schematic perspective view of some components in the sliding screen assembly (the flexible screen support frame 3, the second drive unit 7, the connecting arm 5, the first drive unit 6, and the fixed base 4) in this state.

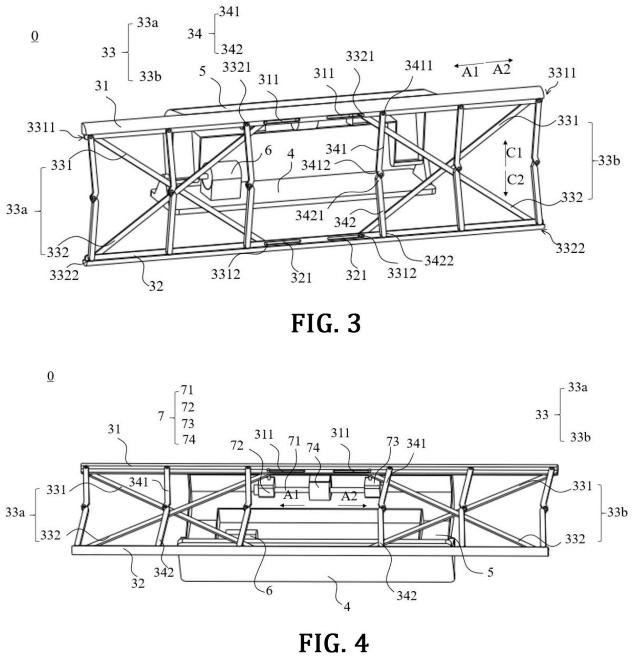

FIG. 7 is a schematic view of the flexible screen support frame 3 abutting against the traction portion 22 and the flexible screen support frame 3 being in a deployed state, and FIG. 3 and FIG. 4 are schematic perspective views of some components in the sliding screen assembly (the flexible screen support frame 3, the second drive unit 7, the connecting arm 5, the first drive unit 6, and the fixed base 4) in this state.

Compared with the technical solutions in the related art where the deploying and retracting mechanism of the flexible screen needs to occupy the upper space or the deploying and retracting mechanism of the flexible screen needs to drive the flexible screen to move along a complex trajectory before deploying and retracting the flexible screen, a position of arranging the sliding screen assembly in this embodiment does not need to occupy the upper space. At the same time, by rotating the connecting arm 5 in the fifth direction (i.e., the direction B1) and the sixth direction (i.e., the direction B2) as shown in FIG. 6, this embodiment simplifies the motion trajectory of the sliding screen assembly by replacing the complex motion trajectory of the flexible screen driven by the deploying and retracting mechanism of the flexible screen (for example, the deploying and retracting mechanism of the flexible screen drives the flexible screen to be transferred from the back side of the dashboard to the upper side of the dashboard, and then slides down from the upper side to be deployed). This also allows the sliding screen assembly to be arranged in a limited space. Further, after the flexible screen support frame 3 abuts against the traction portion 22 of the flexible screen 2, the flexible screen support frame 3 is deployed and retracted linearly to directly drive the flexible screen 2 to be deployed and retracted linearly. In other words, the motion trajectory of the flexible screen 2 is a linear motion trajectory, and the motion trajectory is simple.

In some possible embodiments of the present application, referring to FIG. 3, the flexible screen support frame 3 includes an upper rod 31, a lower rod 32, and a scissor-type link 33.

The scissor-type link 33 includes a first link 331 and a second link 332, the first link 331 and the second link 332 being hinged at middle portions.

The first link 331 has a first end 3311 and a second end 3312 opposite to each other, the first end 3311 is hinged to the upper rod 31, and the second end 3312 is slidably connected to the lower rod 32. Specifically, the lower rod 32 is provided with a second sliding slot 321, and the second end 3312 can slide in the second sliding slot 321 in a first direction (i.e., a direction A1) and a second direction (i.e., a direction A2).

The second link 332 has a third end 3321 and a fourth end 3322 opposite to each other, the third end 3321 is slidably connected to the upper rod 31, and the fourth end 3322 is hinged to the lower rod 32. Specifically, the upper rod 31 is provided with a first sliding slot 311, and the third end 3321 can slide in the first sliding slot 311 in the first direction (i.e., the direction A1) and the second direction (i.e., the direction A2).

The scissor-type link 33 is slidably connected to the upper rod 31 and the lower rod 32. By unfolding and folding the scissor-type link 33, the upper rod 31 and the lower rod 32 are driven to move away from and approach each other, so that the flexible screen support frame 3 is deployed and retracted. Specifically, the second end 3312 of the first link 331 slides in the second sliding slot 321 in the first direction (i.e., the direction A1), and the third end 3321 of the second link 332 slides in the first sliding slot 311 in the first direction (i.e., the direction A1), and the flexible screen support frame 3 is deployed in the fourth direction (i.e., the direction C2). The second end 3312 of the first link 331 slides in the second sliding slot 321 in the second direction (i.e., the direction A2), and the third end 3321 of the second link 332 slides in the first sliding slot 311 in the second direction (i.e., the direction A2), and the flexible screen support frame 3 is retracted in the third direction (i.e., the direction C1).

In this embodiment, the flexible screen support frame 3 is deployed and retracted along a linear trajectory through the linkage of the scissor-type link 33, the upper rod 31, and the lower rod 32, thus achieving a simple structure and a simple motion trajectory. After being deployed, the flexible screen support frame 3 can provide a supporting force to the flexible screen 2 to prevent collapse of the flexible screen 2 that results in a poor screen display effect.

In some possible embodiments of the present application, still referring to FIG. 3, the flexible screen support frame 3 includes an intermediate link. The intermediate link includes a third link 341 and a fourth link 342.

The third link 341 has a fifth end 3411 and a sixth end 3412 that are opposite to each other. The fourth link 342 has a seventh end 3421 and an eighth end 3422 that are opposite to each other. The fifth end 3411 is hinged to the upper rod 31, the sixth end 3412 is hinged to the seventh end 3421, and the eighth end 3422 is hinged to the lower rod 32. The intermediate link 34 is deployed and retracted as the scissor-type link 33 slides with the upper rod 31 and the lower rod 32. In other words, the intermediate link is deployed and retracted as the scissor-type link 33 is unfolded and folded.

Specifically, the second end 3312 of the first link 331 slides in the second sliding slot 321 in the first direction (i.e., the direction A1). When the third end 3321 of the second link 332 slides in the first sliding slot 311 in the first direction (i.e., the direction A1), the third link 341 and the upper rod 31, the third link 341 and the fourth link 342, and the fourth link 342 and the lower rod 32 rotate accordingly, so that the third link 341 and the fourth link 342 are rotated to a position that is basically linear, and the intermediate link 34 is deployed. The second end 3312 of the first link 331 slides in the second sliding slot 321 in the second direction (i.e., the direction A2). When the third end 3321 of the second link 332 slides in the first sliding slot 311 in the second direction (i.e., the direction A2), the third link 341 and the upper rod 31, the third link 341 and the fourth link 342, and the fourth link 342 and the lower rod 32 rotate accordingly, so that the third link 341 and the fourth link 342 are rotated to a position in which a side edge of the third link 341 and a side edge of the fourth link 342 are parallel, and the intermediate link 34 is retracted.

In this embodiment, the intermediate link 34 is arranged in front of the scissor-type link 33, that is, the intermediate link 34 is arranged closer to the flexible screen 2. When the flexible screen support frame 3 is deployed, the intermediate link 34 is in contact with the flexible screen 2 to provide a supporting force for the flexible screen 2.

In some possible embodiments of the present application, referring to FIG. 3, there are two scissor-type links 33, and the two scissor-type links 33 are symmetrically arranged about a line connecting a center line of the upper rod 31 and a center line of the lower rod 32.

Specifically, the two scissor-type links 33 are respectively a first scissor-type link 33a and a second scissor-type link 33b.

The first scissor-type link 33a and the second scissor-type link 33b are arranged in an extension direction of the upper rod, and the first scissor-type link 33a and the second scissor-type link 33b are symmetrically arranged about the line connecting the center line of the upper rod 31 and the center line of the lower rod 32.

In this embodiment, the two scissor-type links 33 can provide balanced forces for the deployment and retraction of the flexible screen support frame 3, and the flexible screen 2 can be evenly supported in the extension direction of the upper rod 31.

In some possible embodiments provided by the present application, there are at least two intermediate links 34, and the at least two intermediate links 34 are arranged in the extension direction of the upper rod 31. A plurality of rows of intermediate links 34 can support the flexible screen 2 in a more stable and balanced manner.

In some possible embodiments of the present application, referring to FIG. 4, the sliding screen assembly 0 includes a second drive unit 7. The second drive unit 7 is arranged between the two scissor-type links 33.

The second drive unit 7 includes a lead screw 71, a drive motor 74, a first lead screw nut 72, and a second lead screw nut 73.

The lead screw 71 is arranged parallel to the upper rod 31, and the lead screw 71 is arranged between the first scissor-type link 33a and the second scissor-type link 33b. The drive motor 74 is configured to drive the lead screw 71 to rotate.

The first lead screw nut 72 and the second lead screw nut 73 are respectively connected to the third ends 3321 of the two scissor-type links 33 to drive the two third ends 3321 to slide in opposite directions; and/or, the first lead screw nut 72 and the second lead screw nut 73 are respectively connected to the second ends 3312 of the two scissor-type links 33 to drive the two second ends 3312 to slide in opposite directions.

Exemplarily, as shown in FIG. 4, the first lead screw nut 72 is connected to the third end 3321 of the first scissor-type link 33a, and the first lead screw nut 72 can move along the lead screw 71 to drive the third end 3321 of the first scissor-type link 33a to slide.

The second lead screw nut 73 is connected to the third end 3321 of the second scissor-type link 33b, and the second lead screw nut 73 can move along the lead screw 71 to drive the third end 3321 of the second scissor-type link 33b to slide. A sliding direction of the third end 3321 of the second scissor-type link 33b is opposite to a sliding direction of the third end 3321 of the first scissor-type link 33a.

In this embodiment, the drive motor 74 rotates to drive the lead screw 71 to rotate in the forward direction, and the rotation of the lead screw 71 causes the first lead screw nut 72 and the second lead screw nut 73 to move in opposite directions. In other words, the rotation of the lead screw 71 causes the first lead screw nut 72 to move in the first direction (i.e., the direction A1), and the second lead screw nut 73 to move in the second direction (i.e., the direction A2). In this way, the first lead screw nut 72 drives the third end 3321 of the first scissor-type link 33a to slide in the first sliding slot 311 in the first direction (i.e., the direction A1), and the second lead screw nut 73 drives the third end 3321 of the second scissor-type link 33b to slide in the first sliding slot 311 in the second direction (i.e., the direction A2). At the same time, the second end 3312 of the first scissor-type link 33a slides in the second sliding slot 321 in the first direction (i.e., the direction A1), and the second end 3312 of the second scissor-type link 33b slides in the second sliding slot 321 in the second direction (i.e., the direction A2). In this way, the scissor-type links 33 (i.e., the first scissor-type link 33a and the second scissor-type link 33b) and the intermediate links 34 (i.e., the third link 341 and the fourth link 342) are deployed, thereby realizing the deployment of the flexible screen support frame 3.

When the flexible screen support frame 3 is retracted, the drive motor 74 rotates to drive the lead screw 71 to rotate in the reverse direction, and the rotation of the lead screw 71 causes the first lead screw nut 72 and the second lead screw nut 73 to move in opposite directions. In other words, the rotation of the lead screw 71 causes the first lead screw nut 72 to move in the second direction (i.e., the direction A2 ), and the second lead screw nut 73 to move in the first direction (i.e., the direction A1). In this way, the first lead screw nut 72 drives the third end 3321 of the first scissor-type link 33a to slide in the first sliding slot 311 in the second direction (i.e., the direction A2), and the second lead screw nut 73 drives the third end 3321 of the second scissor-type link 33b to slide in the first sliding slot 311 in the first direction (i.e., the direction A1). At the same time, the second end 3312 of the first scissor-type link 33a slides in the second sliding slot 321 in the second direction (i.e., the direction A2), and the second end 3312 of the second scissor-type link 33b slides in the second sliding slot 321 in the first direction (i.e., the direction A1). In this way, the scissor-type links 33 (i.e., the first scissor-type link 33a and the second scissor-type link 33b) and the intermediate links 34 (i.e., the third link 341 and the fourth link 342) are retracted, thereby realizing the retraction of the flexible screen support frame 3.

In some possible embodiments provided in the present application, referring to FIG. 4, a distance between the third ends 3321 of the two scissor-type links 33 is smaller than a distance between the first ends 3311 of the two scissor-type links 33. The second drive unit 7 is arranged between the third ends 3321 of the two scissor-type links 33 and arranged close to the upper rod 31. The second drive unit 7 drives the two third ends 3321 to slide in the upper rod 31, which has a convenient driving effect.

In some possible embodiments of the present application, referring to FIG. 5 to FIG. 7, the traction portion 22 arranged at the free end 21 of the flexible screen 2 is hook-shaped and is configured to abut against the lower rod 32 of the flexible screen support frame 3 so that the flexible screen support frame 3 drives the flexible screen 2 to be deployed and retracted.

In this embodiment, the traction portion 22 is rigid and can stably abut against the lower rod 32, so that the flexible screen support frame 3 can drive the traction portion 22 to deploy and retract the flexible screen 2 along a predetermined trajectory.

Referring to FIG. 1 to FIG. 7, a moving process of the sliding screen assembly 0 provided by the present application is described below.

A deploying process of the flexible screen 2 is as follows: the flexible screen support frame 3 is separated from the traction portion 22 of the flexible screen 2. The first drive unit 6 drives the connecting arm 5 to rotate in the fifth direction (i.e., the direction B1) as shown in FIG. 6, to drive the flexible screen support frame 3 to rotate, so that the flexible screen support frame 3 abuts against the traction portion 22. The second drive unit 7 drives the flexible screen support frame 3 to move in the fourth direction (i.e., the direction C2), so that the flexible screen support frame 3 is deployed. The deployment of the flexible screen support frame 3 pulls the traction portion 22 to move in the fourth direction (i.e., the direction C2), so that the winding unit 1 unwinds the flexible screen 2, and the flexible screen 2 is deployed in the fourth direction (i.e., the direction C2).

A retracting process of the flexible screen 2 is as follows: the second drive unit 7 drives the flexible screen support frame 3 to move in the third direction (i.e., the direction C1), so that the flexible screen support frame 3 is retracted. The retraction of the flexible screen support frame 3 pulls the traction portion 22 to move in the third direction (i.e., the direction C1), so that the winding unit 1 rewinds the flexible screen 2, and the flexible screen 2 is retracted in the third direction (i.e., the direction C1). The first drive unit 6 drives the connecting arm 5 to rotate in the sixth direction (i.e., the direction B2) to drive the flexible screen support frame 3 to rotate, so that the flexible screen support frame 3 is separated from the traction portion 22.

In a second aspect, the present application further provides an automotive seat, including the sliding screen assembly 0 according to any one of aforementioned embodiments in the first aspect.

In this embodiment, the automotive seat includes a hidden portion configured to hide the sliding screen assembly 0 according to any one of aforementioned embodiments in the first aspect.

Referring to FIG. 5 to FIG. 7, the hidden portion includes an opening 11, an accommodating cavity 10, and a cover plate (not shown). The sliding screen assembly 0 is accommodated in the accommodating cavity 10, when the flexible screen 2 is deployed, the sliding screen assembly 0 extends from the accommodating cavity 10 through the opening 11, and when the flexible screen 2 is retracted, the sliding screen assembly 0 is retracted into the accommodating cavity 10 through the opening 11. The cover plate is capable of covering and opening the opening 11, thereby making the appearance of the automotive seat neat and beautiful, and also having a dust-proof effect.

In this embodiment, the hidden portion is provided in the automotive seat, and when the sliding screen assembly is not needed, the sliding screen assembly 0 is retracted and hidden, so that the automotive seat is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automotive seats. In addition, by using the sliding screen assembly provided by the present application, there is no need to arrange visible tracks on an exterior surface of the automotive seat, so that the automotive seat features a simple and elegant appearance. The sliding screen assembly also adds a sporty design to the automotive seat, achieving diversity in the automotive seat.

In a third aspect, the present application further provides an automotive sunroof, including the sliding screen assembly 0 according to any one of aforementioned embodiments in the first aspect.

In this embodiment, the automotive sunroof is arranged on a mounting frame of an automobile, and the mounting frame is provided with a hidden portion configured to hide the sliding screen assembly 0 according to any one of aforementioned embodiments in the first aspect.

Referring to FIG. 5 to FIG. 7, the hidden portion includes an opening 11, an accommodating cavity 10, and a cover plate (not shown). The sliding screen assembly 0 is accommodated in the accommodating cavity 10, when the flexible screen 2 is deployed, the sliding screen assembly 0 extends from the accommodating cavity 10 through the opening 11, and when the flexible screen 2 is retracted, the sliding screen assembly 0 is retracted into the accommodating cavity 10 through the opening 11. The cover plate is capable of covering and opening the opening 11, thereby making the appearance of the automotive sunroof neat and beautiful, and also having a dust-proof effect.

In this embodiment, the hidden portion is provided in the mounting frame of the automotive sunroof, and when the sliding screen assembly is not needed, the sliding screen assembly 0 is retracted and hidden, so that the automotive sunroof is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automotive sunroofs. In addition, by using the sliding screen assembly provided by the present application, there is no need to arrange visible tracks on an exterior surface of the automotive sunroof, so that the automotive sunroof features a simple and elegant appearance. The sliding screen assembly also adds a sporty design to the automotive sunroof, achieving diversity in the automotive sunroof.

In a fourth aspect, the present application further provides an automobile, including a hidden portion configured to hide the sliding screen assembly 0 according to any one of aforementioned embodiments in the first aspect.

Referring to FIG. 5 to FIG. 7, the hidden portion includes an opening 11, an accommodating cavity 10, and a cover plate (not shown). The sliding screen assembly 0 is accommodated in the accommodating cavity 10, when the flexible screen 2 is deployed, the sliding screen assembly 0 extends from the accommodating cavity 10 through the opening 11, and when the flexible screen 2 is retracted, the sliding screen assembly 0 is retracted into the accommodating cavity 10 through the opening 11. The cover plate is capable of covering and opening the opening 11, thereby making the appearance of the automobile neat and beautiful, and also having a dust-proof effect.

In this embodiment, the hidden portion is provided in the automobile, and when the sliding screen assembly is not needed, the sliding screen assembly 0 is retracted and hidden, so that the automobile is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automobiles. In addition, by using the sliding screen assembly provided by the present application, there is no need to arrange visible tracks on an exterior surface of the automobile, so that the automobile features a simple and elegant appearance. The sliding screen assembly also adds a sporty design to the automobile, achieving diversity in the automobile.

In this embodiment, the hidden portion can be provided at any position of the automobile, such as the interior of the automobile or the exterior of the automobile body. The automobile interior is at least one of center console, dashboard, and ceiling of the automobile. The exterior of the automobile body is, for example, the hidden portion outside a door.

Exemplarily, the hidden portion is provided on a dashboard (automobile interior). The fixed base 4 in the sliding screen assembly 0 is fixed on the dashboard or a pipe beam. The flexible screen 2 is hidden in the dashboard through the winding unit 1.

Referring to FIG. 5 to FIG. 7, a dashboard region includes a decorative component 8 and a baffle 9. The decorative component 8 and the baffle 9 define the accommodating cavity 10 for accommodating the sliding screen assembly 0. The baffle 9 is a front baffle configured to shield the sliding screen assembly 0 to prevent the sliding screen assembly 0 from being directly seen from the front.

Although the present application has been illustrated and described with reference to certain preferred implementations of the present application, those of ordinary skill in the art should understand that the above content is a further detailed description of the present application in conjunction with specific implementations, and it cannot be determined that the specific implementation of the present application is limited to these descriptions. Those skilled in the art can make various changes in form and details, including making several simple deductions or substitutions, without departing from the spirit and scope of the present application.

## Claims

1. A sliding screen assembly, **characterized in** comprising:
a winding unit;
a flexible screen, wound on the winding unit, the flexible screen being provided with a free end, and the free end being provided with a traction portion; and
a flexible screen support frame capable of being deployed and retracted;
where the flexible screen support frame is capable of abutting against the traction portion, and the flexible screen support frame is deployed to pull the traction portion to move in a forward direction, so that the winding unit unwinds the flexible screen, the flexible screen is deployed, and the flexible screen support frame supports the flexible screen; the flexible screen support frame is retracted to drive the traction portion to move in a reverse direction, so that the winding unit rewinds the flexible screen, and the flexible screen is retracted.

2. The sliding screen assembly according to claim 1, **characterized in** comprising:
a fixed base;
a connecting arm having one end hinged to the fixed base and the other end fixedly connected to the flexible screen support frame; and
a first drive unit connected to the connecting arm and configured to drive the connecting arm to rotate, so that the connecting arm is capable of driving the flexible screen support frame to rotate, allowing the flexible screen support frame to abut against and separate from the traction portion.

3. The sliding screen assembly according to claim 2, **characterized in that** the flexible screen support frame comprises:
an upper rod;
a lower rod; and
a scissor-type link, comprising a first link and a second link, the first link and the second link being hinged at middle portions;
wherein the first link has a first end and a second end opposite to each other, the first end is hinged to the upper rod, and the second end is slidably connected to the lower rod;
the second link has a third end and a fourth end opposite to each other, the third end is slidably connected to the upper rod, and the fourth end is hinged to the lower rod; and
by unfolding and folding the scissor-type link, the upper rod and the lower rod are driven to move away from and approach each other, so that the flexible screen support frame is deployed and retracted.

4. The sliding screen assembly according to claim 3, **characterized in that** the flexible screen support frame comprises:
an intermediate link, the intermediate link comprising a third link and a fourth link, the third link having a fifth end and a sixth end opposite to each other, the fourth link having a seventh end and an eighth end opposite to each other, wherein the fifth end is hinged to the upper rod, the sixth end is hinged to the seventh end, and the eighth end is hinged to the lower rod; and
the intermediate link is deployed and retracted as the scissor-type link is unfolded and folded.

5. The sliding screen assembly according to claim 4, **characterized in that**:
there are two scissor-type links, and the two scissor-type links are symmetrically arranged about a line connecting a center line of the upper rod and a center line of the lower rod.

6. The sliding screen assembly according to claim 5, **characterized in that** there are at least two intermediate links, and at least two of the intermediate links are arranged in an extension direction of the upper rod.

7. The sliding screen assembly according to claim 5 or 6, **characterized in** comprising a second drive unit, the second drive unit being arranged between the two scissor-type links;
wherein the second drive unit comprises:
a lead screw, the lead screw being arranged parallel to the upper rod and arranged between the two scissor-type links;
a drive motor configured to drive the lead screw to rotate;
a first lead screw nut; and
a second lead screw nut;
wherein the first lead screw nut and the second lead screw nut are respectively connected to the third ends of the two scissor-type links to drive the two third ends to slide in opposite directions; and/or, the first lead screw nut and the second lead screw nut are respectively connected to the second ends of the two scissor-type links to drive the two second ends to slide in opposite directions.

8. The sliding screen assembly according to claim 7, **characterized in that** a distance between the third ends of the two scissor-type links is smaller than a distance between the first ends of the two scissor-type links.

9. The sliding screen assembly according to claim 3, **characterized in that**:
the traction portion of the flexible screen is hook-shaped and is configured to abut against the lower rod of the flexible screen support frame so that the flexible screen support frame drives the flexible screen to be deployed and retracted.

10. An automotive seat, **characterized in** comprising the sliding screen assembly according to any one of claims 1 to 9.

11. An automotive sunroof, **characterized in** comprising the sliding screen assembly according to any one of claims 1 to 9.

12. An automobile, **characterized in** comprising a hidden portion configured to hide the sliding screen assembly according to any one of claims 1 to 9;
wherein the hidden portion comprises:
an opening;
an accommodating cavity, wherein the sliding screen assembly is accommodated in the accommodating cavity, and when the flexible screen is deployed, the sliding screen assembly extends from the accommodating cavity through the opening, and when the flexible screen is retracted, the sliding screen assembly is retracted into the accommodating cavity through the opening; and
a cover plate capable of covering and opening the opening.
